(19) Europäisches Patentamt
European Patent Office
Office européen des brevets

(11) **EP 3 110 094 A1**

(12) **EUROPEAN PATENT APPLICATION**

(43) Date of publication:
**28.12.2016 Bulletin 2016/52**

(51) Int Cl.:
**H04L 25/03** (2006.01)    **H04L 27/00** (2006.01)
**H04B 7/08** (2006.01)    **H04L 1/00** (2006.01)

(21) Application number: **15306017.3**

(22) Date of filing: **26.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Sequans Communications S.A.**
**92700 Colombes (FR)**

(72) Inventors:
• MUQUET, Bertrand
78100 Saint-Germain en Laye (FR)
• ASSOULINE, Benny
Petach Tikvah (IL)
• TOLEDANO, Ron
Petach Tikvah (IL)

(74) Representative: **Morrall, Jonathan Ian McLachlan et al**
**Kilburn & Strode LLP**
**20 Red Lion Street**
**London WC1R 4PJ (GB)**

(54) **1D MODULATION AND INTERFERENCE MANAGEMENT**

(57) A method of transmitting data from a transmitter node to a single antenna receiver node of a communication system comprising deriving information indicative of a communication scheme to be used wherein the communication scheme comprises single dimension modulation of data to be transmitted and transmitting data to the single antenna receiver node using the communication scheme.

Fig. 7

**Description**

This invention relates to interference management and range extension in communications systems. It is particularly suitable for use in single antenna receivers.

**Background**

In Release 12 of the 3GPP standard, a new category for user equipment (UE), known as Category 0, has been specified to reduce the cost and power consumption of LTE receivers to address new markets. One of the major changes introduced by Category 0 comprises using only a single antenna for the receive path rather than two antennas as for legacy UEs.

This work is continuing for the next version of the LTE standard (Release 13) with the aims of:

- Increasing the link budget and hence cell coverage.
- Decreasing UE complexity.
- Decreasing the overall power consumption of both UE and base station.

Using a single antenna at the receiver is a trend recently observed in existing and emerging standards (especially in the world of Internet of Things) as it realises a reduction in the receiver cost and complexity. However, transmission performance can be degraded by using a single antenna:

- Moderate performance loss (a few dB) when the system is noise limited, i.e. limited by the level of the receive signal.
- Severe performance loss when the system is limited by the interference created by other transmitting devices (other receivers or base stations surrounding the receiving device).

While several techniques exist to mitigate interference, their performance is significantly reduced with a single antenna receiver. With LTE, for instance, it is proposed to mitigate this reduction in performance by introducing repetition (consecutive transmissions of the same message) resulting in increased power consumption and loss of spectral efficiency (the message is transmitted several times which therefore requires decoding several times). Similarly it is planned to use repeated transmissions to increase the link budget.

Accordingly, there is a need for a solution to the issues of the use of a single antenna receiver under interference conditions. A more robust single antenna receiver system is desired.

Summary

According to a first aspect there is provided a method as defined in Claim 1 of the appended claims. Thus there is provided a method of transmitting data from a transmitter node to a single antenna receiver node of a communication system comprising deriving information indicative of a communication scheme to be used, wherein the communication scheme comprises single dimension modulation of data to be transmitted, and transmitting data to the single antenna receiver node using the communication scheme.

Optionally, the information is provided to the single antenna receiver node at the request of the transmitter node.

Optionally, the method wherein the information is provided to the transmitter node at the request of the receiver node.

Optionally, the method wherein the information is provided in the physical layer of the communication system.

Optionally, the method wherein the information is provided in a DCI message of an LTE communication system.

Optionally, the method wherein the information is provided in a DL MAP message of a Wimax communication system.

Optionally, the method wherein the information is provided in one of the CSI message, CQI, RI or PMI of an LTE communication system.

Optionally, the method wherein the information is provided in one of CQI feedback message or a MIMO mode feedback message of a Wimax communication system.

Optionally, the method wherein the information is provided in the MAC layer of the communication system.

Optionally, the method wherein the information is provided in a header and/or a sub-header of a MAC packet.

Optionally, the method wherein the information is provided in the RRC layer of the communication system.

Optionally, the method wherein a portion of the time and frequency radio resource of the communication system is restricted to single dimension modulation.

Optionally, the method wherein the transmitter node is provided with information indicative of the portion by a network backbone.

According to a second aspect there is provided a method as defined in claim 2. Thus there is provided a method of receiving data from a transmitter node at a single antenna receiver node of a communication system comprising deriving information indicative of a communication scheme to be used, wherein the communication scheme comprises single dimension modulation of data to be transmitted, and receiving data at the single antenna receiver node using the communication scheme. Optionally, the method wherein the information is provided to the single antenna receiver node at the request of the transmitter node.

Optionally, the method wherein the information is provided to the transmitter node at the request of the receiver node.

Optionally, the method wherein the information is provided in the physical layer of the communication system.

Optionally, the method wherein the information is provided in a DCI message of an LTE communication system.

Optionally, the method wherein the information is provided in a DL MAP message of a Wimax communication system.

Optionally, the method wherein the information is provided in one of the CSI message, CQI, RI or PMI of an LTE communication system.

Optionally, the method wherein the information is provided in one of CQI feedback message or a MIMO mode feedback message of a Wimax communication system.

Optionally, the method wherein the information is provided in the MAC layer of the communication system.

Optionally, the method wherein the information is provided in a header and/or a sub-header of a MAC packet.

Optionally, the method wherein the information is provided in the RRC layer of the communication system.

Optionally, the method wherein the transmission of data occurs on an uplink or a downlink.

Optionally, the method wherein the communication scheme comprises one of SISO transmission, STC encoded transmission or two layer transmission.

Optionally, the method wherein the communication scheme comprises SISO transmission and the single value decomposition of an estimated noise covariance matrix, $\mathbf{R}=a^2\,\mathbf{ff}^H + b^2\,\mathbf{gg}^H$, where a>b, a and b are the matrix eigenvalue and f and g are associated eigenvectors with unit norm, further wherein if ratio a/b tends to 1, the received data is decoded as

s= argmin_s |z-$\mathbf{h}$' s |$^2$, otherwise it is decoded as

hat_s= argmin_s [argmin_s1,s2 | y -$\mathbf{h}$ s - a $\mathbf{f}$ s1 + b $\mathbf{g}$ s2 |$^2$ ]

Optionally, the method wherein the minimization is restricted to s1,s2 corresponding to a 16QAM constellation for interfering signals.

Optionally, the method wherein the single antenna receiver node measures the signal quality of all neighbouring base stations.

Optionally, the method wherein the communication scheme comprises STC transmission and a linear or maximum likelihood decoder is used to decode the received data.

Optionally, the method wherein the communication scheme comprises MIMO transmission and an MMSE or maximum likelihood decoder is used to decode the received data.

Optionally, the method wherein the communication scheme comprises multi user MIMO.

Optionally, the method wherein a portion of the time and frequency radio resource of the communication system is restricted to single dimension modulation.

Optionally, the method wherein the transmitter node is provided with information indicative of the portion by a network backbone.

Optionally, the method wherein the information is provided by way of the RRC layer.

Optionally, the method wherein the transmitter node comprises a base station of a wireless network, and optionally wherein the base station comprises an eNodeB.

Optionally, the method wherein the single antenna receiver node comprises a UE of a wireless network.

According to a third aspect there is provided an apparatus arranged to carry out any of the methods disclosed herein as defined in claim 15.

According to a third aspect there is provided a transmitter arranged to carry out the method according to the first aspect.

According to a fourth aspect, there is provided a single antenna receiver arranged to carry out the method according to the second aspect.

According to a fifth aspect, there is provided a computer readable medium comprising instructions that when executed cause a processor to carry out the method according to any preceding aspect as defined in Claim 16.

With all the aspects, preferable and optional features are defined in the dependent claims.

Also disclosed herein:

A global communication system making use of 1 D constellations, specific receivers and eNb coordination techniques to properly manage interference and increase the link budget and transmission range with single antenna receivers.

Messaging schemes at PHY, MAC and/or RRC layers enabling efficient use of the 1 D modulation scheme with 2D modulations for new standards and also enabling to use the global concept with existing standards in a backward compatible manner.

New receiver structures exploiting 1 D modulation for SISO transmission.

New receiver structures exploiting 1 D modulation for STC.

New transmit and receive structure enabling to perform MU-MIMO with single antenna receiver.

A new messaging scheme comprising messages between network backbone and base station to coordinate base station to restrict usage of some part of the bandwidth to 1 D modulation on one hand; and messages between base stations and receivers on the other hand to make the receivers aware of the coordination.

A new messaging scheme to coordinate base station to restrict usage of some part of the bandwidth to a subset of the 1 D and 2D modulations.

Improved receivers exploiting the 1 D modulation and coordination techniques.

**Brief Description of the Drawings**

Embodiments will now be described, by way of example only, and with reference to the drawings in which:

Figure 1 illustrates an example of a 1 D constellation;
Figure 2 illustrates an example of the 2D constellation counterpart to figure 1;
Figure 3 illustrates a general messaging scheme according to embodiments;
Figure 4 illustrates implementation of the messaging scheme at the physical layer according to an embodiment;
Figure 5 illustrates implementation of the messaging scheme at the MAC layer according to an embodiment;
Figure 6 illustrates implementation of the messaging scheme at the RRC layer according to an embodiment;
Figure 7 illustrates the messaging scheme in a network implementation according to an embodiment;
Figure 8 illustrates the messaging scheme in relation to EPS network elements according to an embodiment; and
Figure 9 illustrates the messaging scheme in a network implementation according to an embodiment.

In the figures, like elements are indicated by like reference numerals throughout.

**Overview**

Efficient management of interference with single antenna receivers and range extension is provided by way of features implemented at one or all of receiver side, base station side and network side.

Most recent communication standards such as LTE or Wimax (802.16e) use 2D constellations in order to increase spectral efficiency and 1 D constellations (most frequently BPSK) are not often used at the present time as the loss of spectral efficiency incurred is considered unacceptable.

Existing systems such as but not limited to 4G, Wimax or LTE, as well as future systems such as 5G can benefit from the disclosed embodiments. Therefore this specification discusses embodiments and features in relation to a generic implementation rather than any one dedicated system. Throughout this specification, where the term transmitter is used, this could apply equally to any wireless transmitter, for example a 4G, LTE, or 5G network base station, or a Wimax transmitter. Modification and tailoring of the techniques described here for a given standard will be within the grasp of the skilled person.

The main features introduced for interference management and range extension comprise:

**1. Single Dimension Transmitters**
Introduction of mechanisms to make use of single dimension modulation such as BPSK, GMSK, PAM or variants on top of legacy standards which keep the legacy 2D modulations and associated mechanism unchanged.
**2. Single Antenna Receivers**
Introduction of receivers suited to the above modulations.
**3. Network Coordination**
Introduction of allocation patterns and coordination messages at the network / base station side to improve the performance of the above receivers.

Implementing all of the above features simultaneously achieves very high performance, however partial implementation of different combinations of the features also results in performance improvement.

The features apply equally for both downlink (DL) and uplink (UL) and are derived in the same manner for both directions of communication between a base station and a receiver.

**Detailed Description**

The three features as introduced in the overview will now be discussed in turn.

**1. Single Dimension Transmitters**

The use of 1 D modulations enables increased performance as will be shown, for example with single antenna receivers in interference limited environments which is typical for LTE Category 0 and Internet of Things (IoT). In embodiments, a 1D constellation is integrated on top of legacy 2D constellations and may be applied to both existing and future standards.

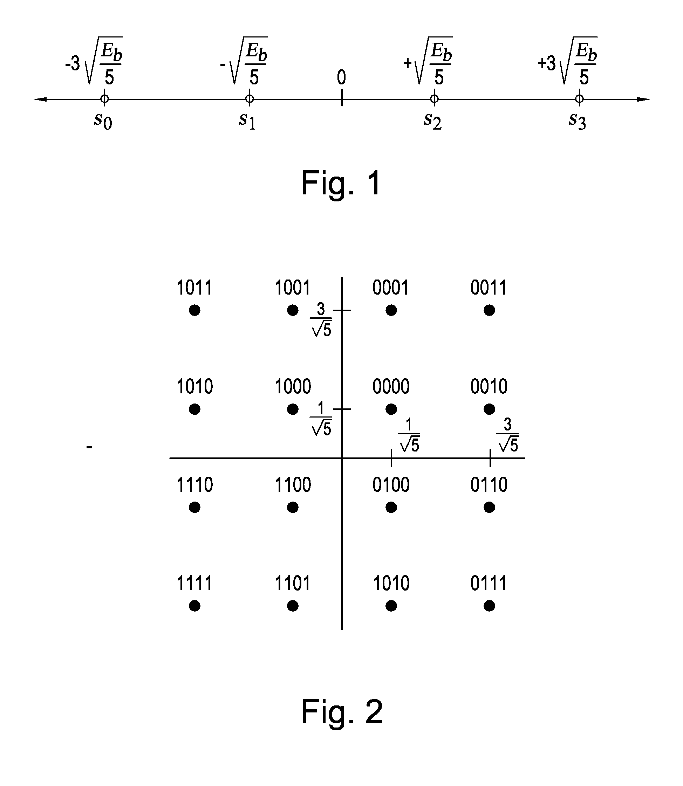

As examples to aid explanation, figure 1 illustrates a 4PAM constellation (1D, only the phase component of the carrier is used, the quadrature component is not transmitted) and figure 2 illustrates the 2D counterpart to figure 1, 16QAM.

In order to use 1 D modulations in existing standards, for example on top of legacy 2D modulation, and in future standards, a backward compatible approach is used:

- Duplication of the existing mechanisms including allocation tables, coding rates tables, channel state information reporting tables. This enables optimal tables for 2D modulations and/or legacy tables of existing standards can still be defined and used.
- Definition of new tables including 1 D modulation (or a mixture of 1 D and 2D modulations)
- Introduction of mechanisms to switch to the new tables

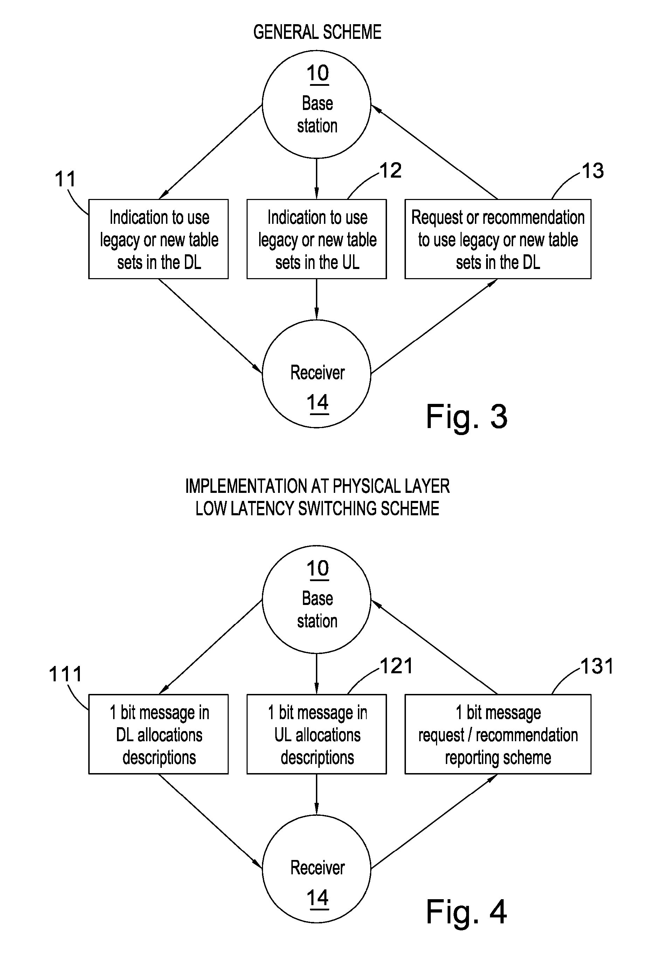

As would be understood, a transmitter and corresponding receiver need to have knowledge of the communication scheme to be used as illustrated in general form in Figure 3. Typically, one of two known schemes are used in wireless standards:

- The first scheme (11, 12) comprises selecting and informing a receiver (14) in relation to the allocation (the position of the message in time and frequency and the size of the message) to be decoded and the modulation that has been used by the transmitter (10). In general this is achieved by transmission to the destination receiver of the selected modulation and packet information in a message that is broadcast by the transmitter (base station in the case of a mobile network). All receivers can listen to the broadcast channel in order to decide if and how to decode the actual message that is sent

- The second scheme (13) is known as closed loop reporting and comprises the sending of reports by the receiver (14) to indicate the modulation and coding rate it would like the transmitter (base station 10) to use.

Providing a way to switch to the new table is provided both in DL and in UL and can be achieved at various levels of a communication standard:

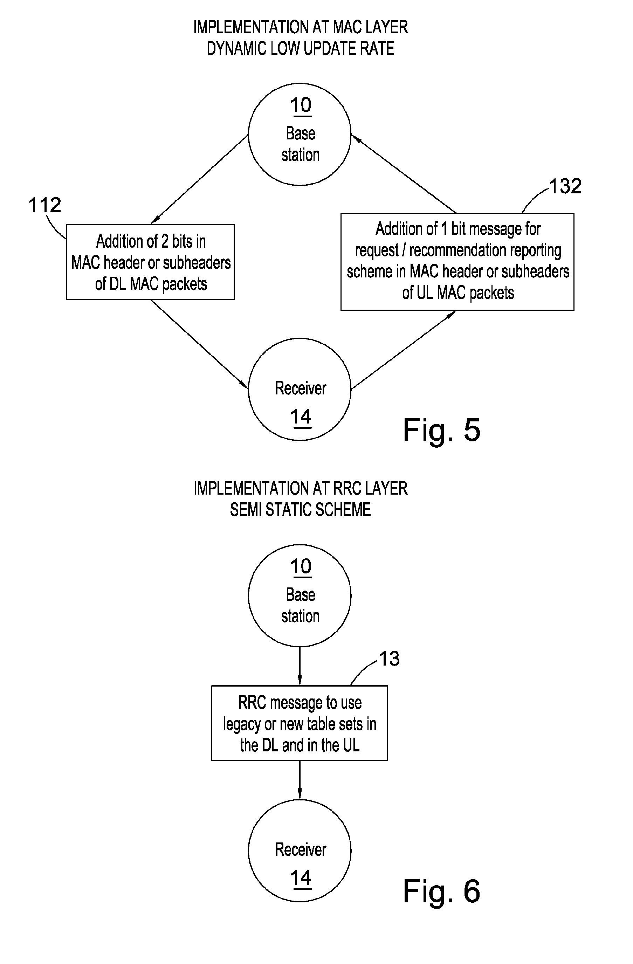

PHY - figure 4
MAC - figure 5
RRC - figure 6

The layer that is used may be chosen based on whether the switch to the new tables is to be performed frequently in a dynamic fashion (for example per allocation), from time to time (less frequently, for example typically every 10x or 100x of allocations), rarely (for example in a semi static manner such as after a handover to a new base station) or just once (for example during the capability negotiation exchanges between a base station 10 and a receiver 14).

The general messaging to be introduced is illustrated in figure 3. Base station 10 communicates with a receiver (14) which may be a receiver of a UE such as a mobile (cell) phone, wifi, and/or Wimax receiver. A message or messages are communicated from the base station to the receiver which indicates whether to use legacy or new tables as described herein for the DL (message(s) 11) and/or the UL (message(s)12). The UE 14 may make a request or recommend to a base station to use legacy of new tables for the DL (message(s) 13).

**Physical Layer (Figure 4)**

In embodiments, for dynamic switching between legacy and new tables, the following mechanisms shall be introduced in the physical layer of the transmission system (Figure 4):

1) Dynamic selection of tables to be used decided by the base station 10 and communicated in the allocations description messages. For instance in LTE, 1 bit can be added to the Downlink Control Information (DCI) messages describing the DL allocations (111) and correspondingly for the DCI describing the UL allocations (121). This bit will be used to indicate that the new tables set shall be used. As is known, DCI comprises messages describing the allocations, i.e. they indicate a message has been transmitted and they contain all the information required to decode it in relation to:

> o The target user for UL or DL - all other users ignore the particular allocation
> o Decoding information (coding rate, modulation)
> o Allocation description (timing, frequency, spatial layer, etc...)
> o Etc...

In Wimax, this DCI functionality is provided by the DL MAP message as would be understood.
2) Dynamic selection of tables to be used decided by the receiver (14) and communicated to the base station (10) in the channel state information (CSI) reporting messages (131). For instance in LTE, a one bit message and reporting scheme can be added to the Channel Quality Information (CQI), Rank Indicator (RI) and Precoding-Matrix Indicator (PMI) reports so that the receiver can indicate to the base station that it would like to use the new table set. There is generally a feedback mechanism built into communication systems. In LTE, it is CSI and covers several feedback mechanisms such as CQI, RI and PMI.

For Wimax, corresponding mechanisms to CQI and RI in LTE can be used. These are known as "CQI feedback" and "MIMO mode feedback".

**Media Access control (MAC) Level (Figure 5)**

In an embodiment, for dynamic switches occurring less frequently, the same principle can be extended at the MAC level. MAC can be modified to introduce 2 bits in MAC headers or optional sub-headers of DL MAC packets (112), each bit indicating if the legacy or new tables shall be used in the DL and UL respectively. For request/recommendation to use legacy or new tables from a UE 14, one bit shall be added to the MAC header or sub-headers of UL MAC packets (132).

As would be understood, the MAC layer is the layer just on top of the physical layer. Its purpose is to match the messages to be transmitted with the physical allocation The header of MAC messages is generally used to convey the message payload description. It is also used to convey control information in an efficient way. For instance the information to increase or decrease the power transmitted is conveyed in the MAC header.

Therefore, the new information in relation to tables to be used may be conveyed at the MAC level.

**Radio Resource Control (RRC) Layer (Figure 6)**

In an embodiment, for semi static switches, the RRC layer can be modified introducing some specific RRC messages (or adding fields to existing RRC messages) to indicate whether the receiver shall use legacy or new tables for DL and/or for UL transmissions (1112). This can happen for instance after a handover to a new base station.

The selection between new and legacy tables may also be achieved statically during negotiation with the network during the attachment procedure. For instance, new "high layer" (higher than RRC) messages can be defined to indicate that a UE (14) has a single receive antenna. Alternatively messages can be defined to indicate that a UE shall use the new tables (even if it has several antennas).

As the RRC message is transmitted only when needed, there is no constant bandwidth overhead, rather only when a change of tables is needed. In other words, an RRC message is less compact than a MAC header which is less compact than a PHY descriptor but a PHY descriptor is sent for all messages (including retransmissions), a MAC header message is sent once per message and an RRC is sent only when needed.

Generally, for a control scheme that is very reactive, the PHY layer may be used (figure 4), but all physical messages will carry the control scheme therefore bandwidth overhead can be large.

For a less dynamic control scheme, the MAC header may be used (figure 5) which is less dynamic but less bandwidth is required.

For even less dynamism, the control scheme may be positioned one level higher in an RRC message (figure 6).

In another embodiment of static selection, usage of the new table set may be linked to some already existing signaling. For instance, it is frequent that receivers (14) define and advertise they belong to a class of receivers with specific capabilities and the usage of new tables can be associated to some classes of receivers. For example, in an embodiment, all UEs of an LTE network that advertise themselves as a Category 0 UE can be implicitly assumed to make use of 1D constellations and associated mechanisms as described herein.

In a further embodiment, a more global approach may be taken where coordination between base stations 10 to define areas of the time-frequency radio resource that will be reserved to the 1 D modulation and the associated table. Allocations in those areas would automatically and implicitly make use of the new sets of tables without any need for additional signaling in the allocation descriptions. This is described in Section 3 - Network Coordination.

## 2. Single Antenna Receivers

New single antenna receivers have been derived for use with the 1 D constellations as proposed for the new single dimension transmitters of section 1.

Encoding schemes such as:

i) Single layer single input single output (SISO) transmission in all its classical variants (single layer beamforming in particular).
ii) Space time coded (STC) encoded signals using either time or frequency diversity (schemes such as the Alamouti space time code).
iii) Two layer transmission.

In case of interference limited environments, the new receivers will provide improved performance compared to a corresponding known receiver.

### i) SISO transmission

We can express generically the received signal as:

$$y = hs + n$$

This simple signal can be expressed in the following form by splitting the real and imaginary parts:

$$\begin{bmatrix} yr \\ yi \end{bmatrix} = \begin{bmatrix} hr \\ hi \end{bmatrix} \text{s} + \begin{bmatrix} nr \\ ni \end{bmatrix} = \mathbf{h}s + \mathbf{n}$$

The legacy receiver in this case is the maximum ratio combining (MRC) receiver which can be expressed as:

$$\text{hat\_s} = \text{argmin\_s} \mid y - \mathbf{h}\, s \mid^2 \qquad (1)$$

(hereinafter 'hat_' signifies an estimate) where the argument minimization is taken over the points "s" of the 1 D constellation (e.g. -1 and +1 for BPSK).

A receiver with potential best performance in some cases can be derived as:

$$\mathbf{z} = \mathbf{R}^{-1/2}\mathbf{y} = \mathbf{R}^{-1/2}\mathbf{h}s + \mathbf{n}' = \mathbf{h}'s + \mathbf{n}' \qquad (2)$$

This is the known as the Wiener filter or noise whitener. from there the signal can be decoded as

$$s = \text{argmin\_s} \mid z - \mathbf{h}'\, s \mid^2 \qquad (2a)$$

where argument minimization of the inside function (argmin) is done over the points of the 1D constellation.

In practice **R** is estimated so it can degrade the performance. In general MRC is equal to noise whitener if the matrix **R** is well conditioned.

Note that in practice the noise (interferer) correlation matrix **R** is estimated using various algorithms (e.g. based on pilots) with various granularity (per carrier or per group of carriers). Therefore, in general, the matrix **R** is estimated using some known symbols (the pilots) introduced inside the frame.

In other words, s is known and equal to P so the noise n, can be estimated as n = y-h P. Once the noise is known, its correlation **R** can be estimated.

In some cases (typically with strong interference), receiver (2) will work much better than receiver (1).

The two receivers (1) and (2) are known and will work very well where the interferer is strongly mono-dimensional. This will be the case for instance if an operator / base station vendor decides to restrict some part of the bandwidth to monodimensional constellations only (as described in section 3 - network coordination). This property may be amplified when an interferer is dominant. If no such restriction is applied by the network and BPSK signals can be interfered by bidimensional signals, the receivers described in the following sections offer improved performance.

The single value decomposition (SVD) decomposition of **R**:

$$\mathbf{R} = a^2 \, \mathbf{ff^H} + b^2 \, \mathbf{gg^H} \text{ with } a > b$$

Where a and b are the matrix eigenvalue, f and g are the associated eigenvectors with unit norm.

We will then decode s as follows: if the ratio a/b is smaller than a threshold T, where T is a threshold to be tuned to make the algorithm perform well. In practice, if the ratio a/b tends to 1, the matrix is well conditioned and it is preferable to use (2), otherwise it is badly conditioned and it is preferable to use (3). Therefore we decode considering a threshold T tuned to minimize the error probability. If the ratio a/b is smaller than a threshold T then (3) is used rather than (2):

$$\hat{s} = \text{argmin\_s} \, [ \, \text{argmin\_s1,s2} \, | \, y - \mathbf{h}\, s - a \, \mathbf{f}\, s1 + b \, \mathbf{g}\, s2 \, |^2 \, ] \qquad (3)$$

where the argument minimization is carried out over the points of the mono dimension constellation s and over all the possible points of a 2D constellation (s1,s2). As would be understood, this is a classical way to optimize: an exhaustive search is carried out to test all possible points and the desired point minimizes the Mean Square Error $|y - \mathbf{h}\, s - a \, \mathbf{f}\, s1 + b \, \mathbf{g}\, s2 |^2$

In practice good results for moderate complexity are obtained when the minimization is restricted to (s1, s2) corresponding to a 16QAM constellation (regardless of the actual constellation used by the interferers).

This significantly reduces the complexity of calculation and hence the overhead of using such an algorithm.

If the ratio is smaller than the threshold T then the interferer is strongly 1 D because $\mathbf{R} = a^2 \, \mathbf{ff^H} + b^2 \, \mathbf{gg^H}$ is close to $\mathbf{R} = a^2 \, \mathbf{ff^H}$ and it is preferable to use:

$$\hat{s} = \text{argmin\_s} \, [ \, \text{argmin\_s1} \, | \, y - \mathbf{h}\, s - a \, \mathbf{f}\, s1 \, |^2 \, ] \qquad (4)$$

where the argmin shall be taken over the points of the mono dimension constellation s and over the points of a mono dimension constellation s1.

If by design or owing to coordination techniques described in Section 3 the standard is limiting the modulations to a restricted set, for instance BPSK and QPSK, the receiver can be modified to perform the search over the same restricted set and the argument minimization shall be restricted in (3) and/or (4) to take into account this coordination technique. This aids complexity reduction and improves the performance of interference mitigation.

As shown herein, three receivers described by equations (1), (2) and (3)/(4)may form an improved receiver by taking the receiver that minimizes the mean square error (MSE) used in the argmin expressions.

Other criterion to select one of the three receivers can also be derived using other principles like switches based on ratio between the MSE of each receiver such as:

• Criterion based on ratio a/b

• Criterion based on MSE: assuming you know R, you can derive the MSE for each estimator (the decoders specified by equations (2a), (3) and (4))

In the estimators previously described, there was no strong assumption on the nature of the estimator, the correlation matrix was estimated and it was managed as is.

In an alternative embodiment, another improvement can be achieved comprising estimating the channel estimation f of the main interferer instead of using **R**:

$$s= \text{argmin\_s} [ \text{argmin\_(s1, s2)} \mid y - \mathbf{h} s - \mathbf{f} s1 + \mathbf{f}{\dagger} s2 \mid^2 ] \quad (5)$$

Here the estimator is explicitly trying to cancel an interferer. This will work better if there is a very strong interferer dominating all the others. But it is less robust especially if there are several interferers with roughly the same energy. In such a case, an approach based on R will work better.

Estimating based on (5) may be used in addition to the previous receivers or separately.

One way to determine whether to use the approach of (5) is to rely on measurements of the neighbour cells quality: Such a receiver would be preferred when a cell is strongly interfering the received signal in practice (where the cell's level is close or higher than the level of the wanted signal). Indeed most receivers are embedding a synchronization and cell scanning module whose goal is to measure the signal quality of all cells surrounding the receiver (for instance to decide to perform a handov*er (HO)).

Again if by design or thanks to coordination techniques described in next Section the standard is limiting the modulations to a restricted set, for instance BPSK and QPSK, the receiver (5) can be enhanced to perform the search over the same restricted set and the argument minimization shall be restricted.

To conclude, other expressions for all the above decoders may be derived. For example, the skilled person would be able to use the above starting expressions to derive expressions for LLR (log likelihood ratio) that are used in turbo or convolutional decoders.

### ii) STC transmissions

In most recent communication system, an open loop STC is usually used. Its expression can be generically expressed as:

$$\begin{bmatrix} y1 \\ y2 \end{bmatrix} = \begin{bmatrix} h1 & -h2^* \\ h2 & h1^* \end{bmatrix} \begin{bmatrix} s1 \\ s2 \end{bmatrix} + \begin{bmatrix} n1 \\ n2 \end{bmatrix}$$

where y1 and y2 will either corresponds to two successive samples or two successive subcarriers.

This can be rewritten in the case of a 1 D constellation using the same split on real and imaginary as before as:

$$\begin{bmatrix} y1r \\ y2r \\ y1i \\ y2i \end{bmatrix} = \begin{bmatrix} h1r & -h2r \\ h2r & h1r \\ h1i & h2i \\ h2i & -h1i \end{bmatrix} \begin{bmatrix} s1 \\ s2 \end{bmatrix} + \begin{bmatrix} n1r \\ n2r \\ n1i \\ n2i \end{bmatrix} = \mathbf{H}s + \mathbf{n} \quad (5)$$

which has helped us to introduce 4 equations for 2 unknowns.

From there, we can estimate the noise correlation matrix using various algorithms as mentioned before and whiten the received signal as before except the system is 4x2 real. This way we get

$$\mathbf{z} = \mathbf{R}^{-1/2}\mathbf{H}s + \mathbf{n}' = \mathbf{H}'s + \mathbf{n}'$$

We can use a linear or maximum likelihood (ML) detector to decode this signal (but ML decoder is actually very simple with BPSK signals) or derive LLR. This will be within the grasp of the skilled person once the received signal has been stated as in equation (5) due to the use of 1 D modulation.

### iii) Multiple Input Multiple Output (MIMO) transmissions

In many recent communications systems, two or more symbols can be sent in parallel and decoded using advanced receivers such as a minimum mean square error (MMSE) decoder, sphere decoder or maximum likelihood decoder. Such an approach generally requires to use at least as many antennas as the number of symbols sent in parallel.

Using of 1D modulation enables the use of MIMO transmissions with a single antenna receiver. The received signal whose expression is given by:

$$y = \begin{bmatrix} h1 & h2 \end{bmatrix} \begin{bmatrix} s1 \\ s2 \end{bmatrix} + \begin{bmatrix} nr \\ ni \end{bmatrix} \quad (6)$$

can be rewritten as:

$$\begin{bmatrix} yr \\ yi \end{bmatrix} = \begin{bmatrix} h1r & h2r \\ h1i & h2i \end{bmatrix} \begin{bmatrix} s1 \\ s2 \end{bmatrix} + \begin{bmatrix} nr \\ ni \end{bmatrix} = \mathbf{H}s + \mathbf{n}$$

From this point an MMSE or ML decoder for instance may be used as would be understood such as MMSE expression: s = inverse(H) * y
or
ML expression argmin_s |y - H s |^2

A particular usage of this transmission mode that is of interest is what is usually known as multi user MIMO (MU-MIMO) where data is multiplexed to two users. This could be considered as impossible with single antenna receivers, however, the use 1 D modulation makes it possible.

The specific transmitter to do this is the same as in expression (6) except that s1 belongs to the encoded symbol flow corresponding to one receiver while s2 belongs to the encoded symbol flow corresponding to a second receiver.

In classic MIMO, both s1 and s2 belong to the same encoded flow corresponding to a single receiver, for instance in LTE (transmission mode 5) both s1 and s2 are 2D modulation and you need two receive antennas to decode.

**Special case of UL transmissions**

In the UL, it is likely that the base stations are using several receive antennas This does not prevent the use of the previously described receivers and associated 1 D schemes

As such, an extended version of those receivers can be derived straightforwardly by stacking the equations corresponding to each antenna of the base station before applying the same derivations.

For instance, for single layer transmissions, the system shall be rewritten starting from the equation per base station receive antenna with index $n$:

$$\mathbf{y}^n = \mathbf{h}^n s + \mathbf{n}^n$$

to get:

$$\begin{bmatrix} \mathbf{y}^1 \\ \vdots \\ \mathbf{y}^N \end{bmatrix} = \begin{bmatrix} \mathbf{h}^1 \\ \vdots \\ \mathbf{h}^N \end{bmatrix} s + \begin{bmatrix} \mathbf{n}^1 \\ \vdots \\ \mathbf{n}^N \end{bmatrix}$$

The equation can be reexpressed simply as Y = H s + N

Similar principle can be applied to the other receivers for SISO, STC and MIMO. Receivers (1) to (5) apply by replacing y by Y and h by H in their expression.

**3. Network Coordination**

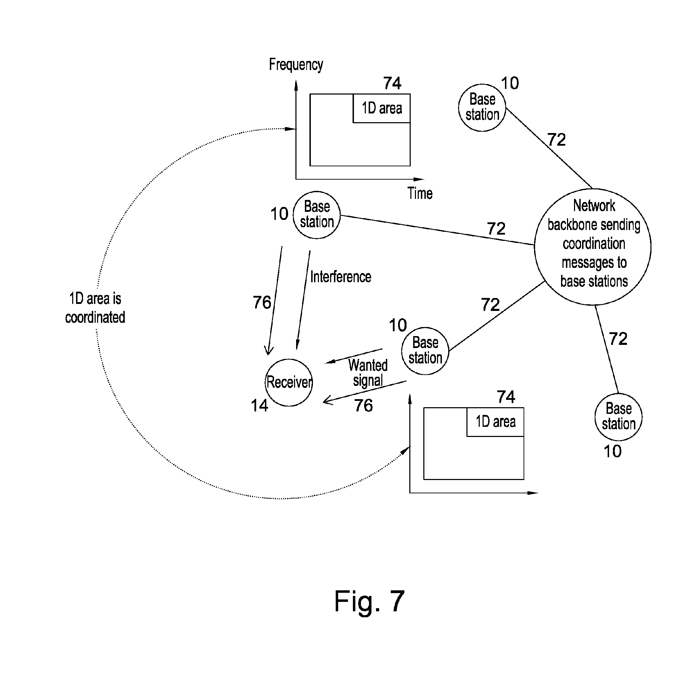

Turning to Figure 7, there is illustrated a typical network arrangement comprising base stations 10 and a receiver (UE) 14.

The previous receivers will lead to performance improvement in interference limited situations. However it is possible to obtain further improvements if interference coordination schemes are introduced at network level by restricting part of the time/frequency radio resource to 1 D modulation (shown as areas 74 in figure 7). This way the receivers previously described offer better performance as the interference is likely to be strongly mono-dimensional. The described receivers will then almost entirely cancel the interference.

A new mechanism is introduced based on new messages 72 to coordinate base stations 10 at the communication layers between the network backbone 70 and base stations 10.

A new message scheme 76 may be introduced in the RRC layer to relay messages from the base stations 10 to the receivers 14 so that the receivers are aware of the coordinated areas 74.

The is achieved because the network coordination schemes force the R matrix to be strongly mono dimensional which means that b will tend to 0 and be very small compared to a and hence receiver (3) will by design perform worse than receiver (4) in this context.

To be more specific, all base stations 10 pertaining to a network or part of a network may reserve allocations to 1 D constellations 74. For instance (and as would be understood):

- In an orthogonal frequency domain multiple access (OFDMA) system, one (or several) rectangular region corresponding to one OFDMA frame are reserved.
- In an orthogonal frequency domain multiplexing (OFDM) system, a section of the subcarriers are reserved in an OFDM frame
- In a time domain multiple access (TDMA) system, a section of the time slots are reserved in a TDMA frame

This can be done in all the frames or on part of them using a periodic pattern for instance. For example, 1 frame (or part of it) out of 2 may use 1 D modulation while the rest uses 2D modulation.

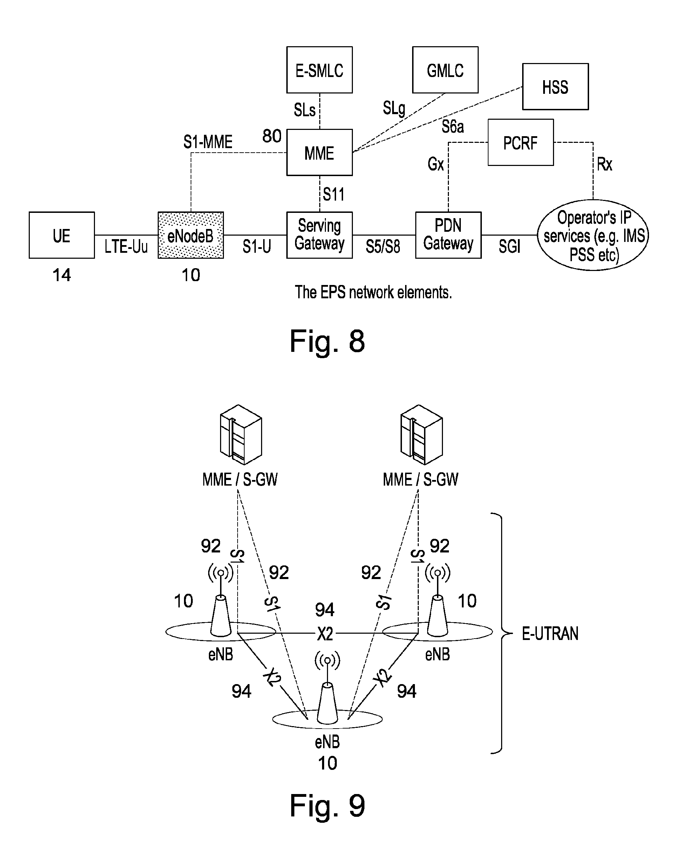

For instance, as shown in figure 8, interface S1-MME (mobility management entity) may be utilized in LTE networks (also known as evolved packet system - EPS): the MME 80 which is connected to several eNb 10 in the network may communicate to the base stations the information about which part of the available bandwidth (in time and/or frequency and/or code domain) is reserved for 1D modulation 74. The remaining parts of figure 8 would be well known to the skilled person and therefore do not need explanation.

The messages may be added in the control layer of the interface between network and base station (S1-CP for LTE).

Figure 9 illustrates another representation in the case of LTE: coordination messages decided by MME 90 and transmitted over S1 (92) or coordination messages decided by a base station and transmitted over X2 (94).

Such schemes may also be applied to the 5th generation (5G) mobile networks.

In order to coordinate the 1 D area 74, two kinds of messages may be utilised:

- Messages 72, 92 from the network 70 to the base stations 10 to describe the 1 D area 74

- Messages from the base stations 10 to the UE 14 to inform a UE that 1D area(s) are being used. This is optional but if the UE is informed it can use this information to help select a suited receiver.

Optionally, coordination messages 94 may be passed between the base stations 10. In such a scheme, the base stations 10 can request/inform the other base station of the area that they are using 1 D area for interference management (again on control layer of the interface used to communicate between eNb)

Using the same principle, some messages can be defined to restrict some part of the spectrum to some subsets of the allowed 1 D and 2D modulations in order to ease the task of interference mitigation receivers (for instance, restrict the usage of some spectrum part to BPSK and QPSK only) which could greatly help in improving performance and reducing complexity of the single antenna receivers described herein.

**Benefits**

Using all (or part of) the proposed modifications will dramatically enhance the system performance and bring some significant gain to single antenna receivers (and as a specific example, to a Category 0 UE operating in a LTE network) for at least the following aspects:

- Range increase and/or power consumption reduction.
- Receiver robustness & complexity.
- Rx performance (PER) and power consumption in interference limited environments.

The described methods may be implemented by a computer program. The computer program which may be in the form of a web application or 'app' comprises computer-executable instructions or code arranged to instruct or cause a computer or processor to perform one or more functions of the described methods. The computer program may be provided to an apparatus, such as a computer, on a computer readable medium or computer program product. The computer readable medium or computer program product may comprise non-transitory media such as as semiconductor or solid state memory, magnetic tape, a removable computer memory stick or diskette, a random access memory (RAM), a read-only memory (ROM), a rigid magnetic disc, and an optical disk, such as a CD-ROM, CD-R/W, DVD or Blu-ray. The computer readable medium or computer program product may comprise a transmission signal or medium for data transmission, for example for downloading the computer program over the Internet.

An apparatus or device such as a computer may be configured to perform one or more functions of the described methods. The apparatus or device may comprise a mobile phone, tablet, laptop or other processing device. The apparatus or device may take the form of a data processing system. The data processing system may be a distributed system. For example, the data processing system may be distributed across a network or through dedicated local connections.

The apparatus or device typically comprises at least one memory for storing the computer-executable instructions and at least one processor for performing the computer-executable instructions.

## Claims

1. A method of transmitting data from a transmitter node to a single antenna receiver node of a communication system comprising:

   deriving information indicative of a communication scheme to be used;
   wherein the communication scheme comprises single dimension modulation of data to be transmitted; and
   transmitting data to the single antenna receiver node using the communication scheme.

2. A method of receiving data from a transmitter node at a single antenna receiver node of a communication system comprising:

   deriving information indicative of a communication scheme to be used;
   wherein the communication scheme comprises single dimension modulation of data to be transmitted; and
   receiving data at the single antenna receiver node using the communication scheme.

3. The method of claim 1 or 2 wherein the information is provided to the single antenna receiver node at the request of the transmitter node.

4. The method of claim 1 or 2 wherein the information is provided to the transmitter node at the request of the receiver node.

5. The method of any preceding claim wherein the information is provided in the physical layer of the communication system.

6. The method of any of claims 1 to 4 wherein the information is provided in the MAC layer of the communication system.

7. The method of any of claims 1 to 4 wherein the information is provided in the RRC layer of the communication system.

8. The method of any preceding claim wherein the transmission of data occurs on an uplink or a downlink.

9. The method of any preceding claim wherein the communication scheme comprises one of SISO transmission, STC encoded transmission or two layer transmission.

10. The method of any of claims 1 to 9 wherein a portion of the time and frequency radio resource of the communication system is restricted to single dimension modulation.

11. The method of claim 10 wherein the transmitter node is provided with portion information indicative of the portion by a network backbone.

12. The method of claim 11 wherein the portion information is provided by way of the RRC layer.

13. The method of any preceding claim wherein the transmitter node comprises a base station of a wireless network, and optionally wherein the base station comprises an eNodeB.

14. The method of any preceding claim wherein the single antenna receiver node comprises a UE of a wireless network.

15. An apparatus arranged to carry out the method of any of claims 1 to 14.

**16.** A computer readable medium comprising instructions that when executed cause a processor to carry out the method of any of claims 1 to 14.

$$-3\sqrt{\frac{E_b}{5}} \qquad -\sqrt{\frac{E_b}{5}} \qquad 0 \qquad +\sqrt{\frac{E_b}{5}} \qquad +3\sqrt{\frac{E_b}{5}}$$

$$s_0 \qquad\qquad s_1 \qquad\qquad\qquad s_2 \qquad\qquad s_3$$

# Fig. 1

| 1011 | 1001 | 0001 | 0011 |
|------|------|------|------|
| ● | ● $\frac{3}{\sqrt{5}}$ | ● | ● |
| 1010 | 1000 | 0000 | 0010 |
| ● | ● $\frac{1}{\sqrt{5}}$ | ● | ● |

$\frac{1}{\sqrt{5}}$ $\frac{3}{\sqrt{5}}$

| 1110 | 1100 | 0100 | 0110 |
|------|------|------|------|
| ● | ● | ● | ● |
| 1111 | 1101 | 1010 | 0111 |
| ● | ● | ● | ● |

# Fig. 2

GENERAL SCHEME

Fig. 3

IMPLEMENTATION AT PHYSICAL LAYER
LOW LATENCY SWITCHING SCHEME

Fig. 4

IMPLEMENTATION AT MAC LAYER
DYNAMIC LOW UPDATE RATE

**10**
Base
station

112

Addition of 2 bits in
MAC header or subheaders
of DL MAC packets

132

Addition of 1 bit message for
request / recommendation reporting
scheme in MAC header or subheaders
of UL MAC packets

Receiver
**14**

# Fig. 5

IMPLEMENTATION AT RRC LAYER
SEMI STATIC SCHEME

**10**
Base
station

13

RRC message to use
legacy or new table sets in
the DL and in the UL

Receiver
**14**

# Fig. 6

Frequency

74

1D area

Time

10

Base
station

72

10

Base
station

72

Network
backbone sending
coordination
messages to
base stations

Interference

76

1D area is
coordinated

76

Receiver

Wanted
signal

10

Base
station

72

72

14

76

74

1D area

Base
station

10

Fig. 7

The EPS network elements.

# Fig. 8

# Fig. 9

Europäisches
Patentamt

European
Patent Office

Office européen
des brevets

# EUROPEAN SEARCH REPORT

Application Number

EP 15 30 6017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/173087 A1 (LAMPINEN KARL MARKO JUHANI [FI] ET AL) 18 June 2015 (2015-06-18) * paragraph [0002] - paragraph [0011] * * paragraph [0031] - paragraph [0032]; figure 1 * * paragraph [0036] - paragraph [0051] * | 1-16 | INV. H04L25/03 H04L27/00 ADD. H04B7/08 H04L1/00 |
| X | US 2014/198677 A1 (XU HAO [US] ET AL) 17 July 2014 (2014-07-17) * paragraph [0035] - paragraph [0036]; figure 1 * * paragraph [0045] - paragraph [0053] * * paragraph [0060] - paragraph [0067] * | 1-16 | |
| X | BIN LI ET AL: "Adaptive Signal Dimensioning for Multi-User MIMO Downlink", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1-5, XP031770094, ISBN: 978-1-4244-3573-9 * Sections I-IV * | 1-16 | TECHNICAL FIELDS SEARCHED (IPC) H04L |

The present search report has been drawn up for all claims

| Place of search | Date of completion of the search | Examiner |
|---|---|---|
| The Hague | 27 November 2015 | Devillers, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6017

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2015

| Patent document cited in search report | Publication date | Patent family member(s) | Publication date |
|---|---|---|---|
| US 2015173087 A1 | 18-06-2015 | EP 2820811 A1<br>GB 2502603 A<br>US 2015173087 A1<br>WO 2013179255 A1 | 07-01-2015<br>04-12-2013<br>18-06-2015<br>05-12-2013 |
| US 2014198677 A1 | 17-07-2014 | CN 105052065 A<br>EP 2946509 A2<br>KR 20150107789 A<br>US 2014198677 A1<br>WO 2014113243 A2 | 11-11-2015<br>25-11-2015<br>23-09-2015<br>17-07-2014<br>24-07-2014 |

EPO FORM P0459

For more details about this annex : see Official Journal of the European Patent Office, No. 12/82